# FASCICULE DE BREVET EUROPEEN

(11) **EP 4 222 354 B1**
(45) Date de publication et mention de la délivrance du brevet: **05.08.2026**
(21) Numéro de dépôt: 21798074.7
(22) Date de dépôt: 24.09.2021
(51) Int. Cl.: F01D 25/18, F02C 7/06, F02C 7/36

(54) **SUPPORT STATORIQUE POUR UN ARBRE DE SOUFFLANTE ENTRAINE PAR UNE BOITE DE REDUCTION DE VITESSE DANS UNE TURBOMACHINE**
STATORTRÄGER FÜR EINE VON EINEM UNTERSETZUNGSGETRIEBE ANGETRIEBENE LÜFTERWELLE IN EINER TURBOMASCHINE
STATOR SUPPORT FOR A FAN SHAFT DRIVEN BY A REDUCTION GEARBOX IN A TURBOMACHINE

(30) Priorité: 01.10.2020 FR 2010071
(43) Date de publication de la demande: 09.08.2023
(73) Titulaire: SAFRAN AIRCRAFT ENGINES, 75015 Paris (FR)
(72) Inventeur: PERDRIGEON, Christophe Marcel Lucien, 77550 MOISSY-CRAMAYEL (FR); DESOMBRE, Didier Gabriel Bertrand, 77550 MOISSY-CRAMAYEL (FR); SERVANT, Régis Eugène Henri, 77550 MOISSY-CRAMAYEL (FR)
(74) Mandataire: Regimbeau
(86) Numéro de dépôt international: PCT/FR2021/051656
(87) Numéro de publication internationale: WO 2022/069824

(56) Documents cités:
- EP-A1- 1 375 941
- FR-A1- 3 030 616
- FR-A1- 3 035 154
- US-A1- 2020 095 890

## Description

### DOMAINE DE L'INVENTION

La présente invention concerne les turbomachines munies d'une soufflante et vise en particulier le support d'un arbre de soufflante entraînant un disque de soufflante dans une turbomachine comprenant ou non un réducteur de vitesse pour entraîner la soufflante.

### ETAT DE LA TECHNIQUE

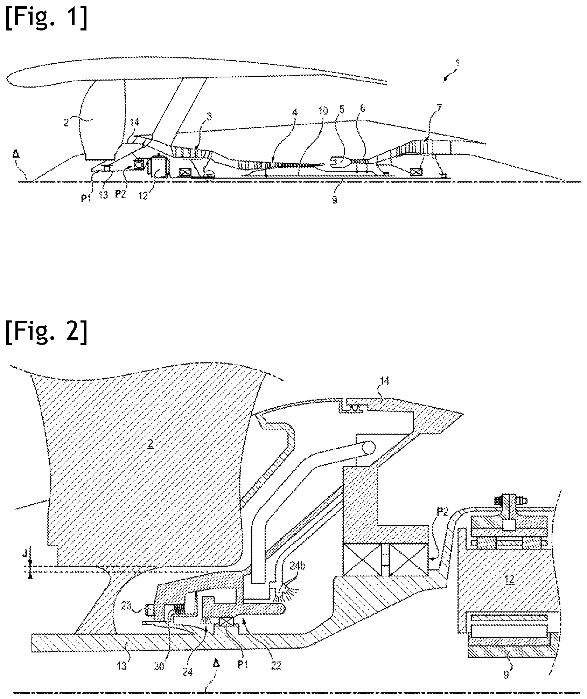

En référence à la figure 1, une turbomachine est représentée de manière schématique, plus spécifiquement un turboréacteur axial 1 à double flux. Le turboréacteur 1 illustré s'étend selon un axe Δ et comporte successivement, dans le sens d'écoulement des gaz dans la turbomachine, la soufflante 2, une section de compression comprenant un compresseur basse pression 3 et un compresseur haute pression 4, une chambre de combustion 5, et une section de turbine comprenant une turbine haute pression 6 et une turbine basse pression 7, et une tuyère d'échappement.

Le compresseur basse pression 3 et l'arbre d'entrée du réducteur sont entrainés en rotation par la turbine basse pression 7 par l'intermédiaire d'un premier arbre de transmission 9, tandis que le compresseur haute pression 4 est entrainé en rotation par la turbine haute pression 6 par l'intermédiaire d'un deuxième arbre de transmission 10. L'arbre de sortie du réducteur entraîne en rotation la soufflante 2.

En fonctionnement, un écoulement d'air comprimé par les compresseurs basse et haute pression 3 et 4 alimente une combustion dans la chambre de combustion 5, dont l'expansion des gaz de combustion entraîne les turbines haute et basse pression 6, 7. L'air propulsé par la soufflante 2 et les gaz de combustion sortant du turboréacteur 1 à travers la tuyère d'échappement exercent une poussée de réaction sur le turboréacteur 1 et, à travers lui, sur un véhicule ou un engin tel qu'un aéronef.

Une boîte de réduction de vitesse 12 est entraînée par le premier arbre de transmission 9. Elle entraîne à son tour un arbre de soufflante 13. Le disque de soufflante 2 est rigidement lié à l'arbre de soufflante 13 et tourne avec une vitesse de rotation réduite par rapport à la vitesse de rotation de l'arbre de transmission 9.

En référence à la figure 1, l'arbre de soufflante 13 est relié à un stator 14 de la turbomachine par deux paliers :
- un palier P1 assurant le guidage de l'arbre de transmission 9, par exemple un palier à rouleaux comprenant un film fluide amortisseur (également connu sous le terme anglais « squeeze film damper ») amortissant les modes vibratoires, et
- un palier P2 reprenant l'effort axial de poussée, par exemple un palier à billes.

Le palier à rouleaux et à film fluidique ne nécessite pas d'être décrit dans la présente description car son arrangement est de type connu.

L'architecture générale à deux paliers pour l'arbre de soufflante associé à une boîte de réduction est connue par exemple dans le brevet FR 3 061 238. Dans ce type d'architecture, l'encombrement de la boite de réduction oblige à positionner le premier palier à rouleaux sous le disque de soufflante, c'est à dire dans un volume annulaire intérieur au disque, comme suggéré par exemple par les figures 2, 3 ou 4 du document FR 3 061 238. Il est alors également nécessaire dans cette architecture de placer un support de palier qui fait partie du stator proche du disque de soufflante. La proximité entre ces deux pièces est une contrainte supplémentaire par rapport à l'architecture des moteurs classiques dépourvus de boîte de réduction. Cette architecture contraint également le rapport de moyeu de la soufflante car la conception d'un disque de soufflante radialement compact est rendue difficile par la présence du premier palier à rouleau disposé dans le volume annulaire intérieur au disque. En effet, ce premier palier situé côté amont du second palier à billes présente forcément un encombrement radial qui pose des contraintes de compacité radiale du disque de soufflante. Il est notamment difficile de diminuer l'encombrement radial propre à loger les pieds des aubes de soufflante en augmentant le diamètre d'extrémité intérieure amont au niveau des bords d'attaque des aubes de soufflante participant à la définition du rapport de moyeu.

Or les jeux axiaux et radiaux résultants, c'est-à-dire les distances séparant d'une part dans la direction de l'axe et d'autre part dans la direction radiale à l'axe le support de palier et le disque de soufflante, doivent permettre des déplacements du disque de soufflante 2 en cas de perte d'aube (phénomène également connu sous le terme anglais « Fan Blade Out » ou FBO).

Cette situation demande donc aussi d'optimiser les jeux entre le disque de soufflante et le support statorique du palier P1.

Le document EP 1 375 941 décrit un palier à roulement pour le support d'un arbre en rotation à l'intérieur d'une pièce de structure annulaire, le palier définissant une séparation entre une enceinte à huile et une enceinte à air.

### EXPOSE DE L'INVENTION

Un but général de l'invention est de rendre cette architecture particulière compatible avec de tels déplacements du disque de soufflante.

Le but est atteint dans le cadre de la présente invention grâce à une structure statorique pour une turbomachine telle que défini dans la revendication 1, la structure statorique s'étendant autour d'un axe en correspondance d'un axe de la turbomachine et comprenant :
- un support adapté pour loger un palier d'arbre de soufflante, délimitant une enceinte à huile et présentant une surface interne centrée sur l'axe, et
- un flasque délimitant l'enceinte à huile et une enceinte d'air et présentant une surface externe centrée sur l'axe,
   le support s'étendant autour du flasque de sorte que les surfaces interne et externe sont en regard l'une de l'autre,
   la structure définissant un circuit d'huile formé par au moins un canal amont et un canal aval par référence à un sens d'écoulement de gaz dans la turbomachine en fonctionnement, et un circuit d'air formé par au moins deux canaux amont et deux canaux aval,
- chaque canal amont traversant le flasque, depuis l'enceinte d'air jusqu'à la surface externe en définissant une ouverture externe dans la surface externe,
- chaque canal aval s'étendant à l'intérieur du support et débouchant à la surface interne en définissant une ouverture interne située en regard de l'ouverture externe,
chaque circuit étant orienté entre les ouvertures externe et interne selon une direction comprenant une composante radiale à l'axe.

Ici encore, la structure statorique est située sous le disque de soufflante pour supporter le palier de l'arbre de soufflante. Et elle nécessite un transport d'au moins un fluide (air, huile ou autre) dans la zone située sous le disque de soufflante. La structure statorique comprend un support de palier et un flasque, avec la particularité que c'est le support qui entoure le flasque. De plus à l'interface entre le support et le flasque, le ou les circuits de fluides ne sont pas orientés selon l'axe de la turbomachine. De ce fait, l'invention permet de réduire l'encombrement radial de la structure statorique par rapport à des réalisations nécessitant elles aussi un transport d'au moins un fluide dans la même zone.

Une telle structure statorique est avantageusement complétée par les différentes caractéristiques ou étapes suivantes prises seules ou en combinaison :
- les ouvertures des canaux du circuit d'air se situent en amont des ouvertures du circuit d'huile ;
- pour chaque circuit, les ouvertures des canaux sont réparties dans une direction circonférentielle autour de l'axe ;
- les ouvertures des canaux du circuit d'air sont réparties de manière régulière dans une direction circonférentielle autour de l'axe ;
- le support comprend un tronçon amont définissant la surface interne et un tronçon aval configuré pour loger le palier, le flasque comprenant une gorge d'air dans la surface externe, les canaux amont du circuit d'air débouchant dans la gorge d'air et une gorge d'huile dans la surface externe, le canal amont du circuit d'huile débouchant dans la gorge d'huile ;
- le flasque comprend trois gorges d'étanchéité dans la surface externe respectivement situées en amont des ouvertures des canaux du circuit d'air, entre les ouvertures des canaux du circuit d'air et les ouvertures des canaux du circuit d'huile, et en aval des ouvertures des canaux du circuit d'huile, chaque gorge d'étanchéité étant occupée par un joint en contact avec le support ;
- les canaux présentent une section allongée selon la direction circonférentielle ;
- le circuit d'huile étant un circuit de drainage, la structure définit en outre un circuit de récupération d'huile composé d'au moins un canal s'étendant à l'intérieur du support depuis une ouverture interne définie dans la surface interne par le canal, l'ouverture interne étant en aval du flasque et faisant déboucher le canal dans l'enceinte d'huile selon une direction comprenant une composante radiale ;
- le canal du circuit de récupération présente une section allongée selon la direction circonférentielle ;
- la structure statorique comprend, en amont du flasque, un organe de fixation du flasque au support ;
- un dispositif anti-erreur agencé pour assurer une position angulaire prédéterminée du flasque par rapport au support.

L'invention porte également sur une turbomachine comprenant une structure statorique telle que présentée ci-avant.

Avantageusement, mais facultativement, la turbomachine peut être complétée par :
- un arbre de soufflante apte à entraîner un disque de soufflante,
- un palier d'arbre de soufflante délimitant l'enceinte à huile et reliant la structure statorique et l'arbre, et
- un déflecteur délimitant l'enceinte à huile, apte à être entraîné par l'arbre et s'étendant radialement vers l'ouverture du canal du circuit de récupération, une extrémité radiale externe du déflecteur étant située en regard de l'ouverture de sorte que de l'huile peut s'écouler le long du déflecteur vers le canal du circuit de récupération.

Enfin, l'invention porte également sur un aéronef comprenant une turbomachine telle qu'on vient de la présenter.

### DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :
[Fig. 1] la figure 1, déjà discutée, est une représentation schématique d'une turbomachine.
[Fig. 2] la figure 2 est une représentation schématique de la zone d'une turbomachine située entre le disque de soufflante et la boite de réduction de vitesse.
[Fig. 3]
   [Fig. 4A]
   [Fig. 4B]

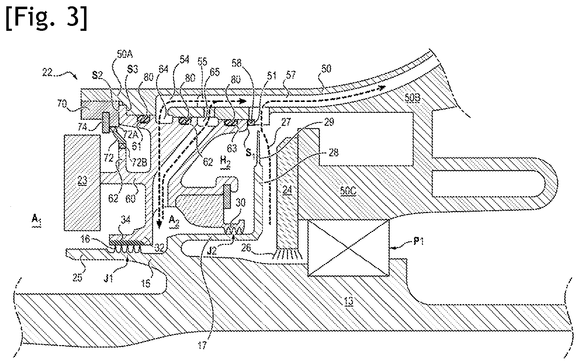

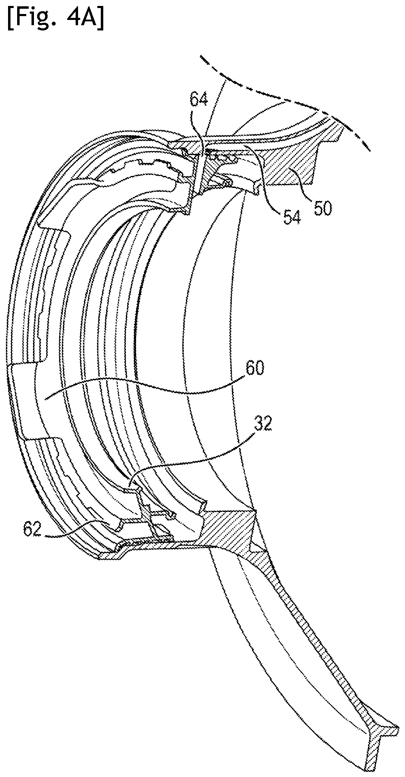

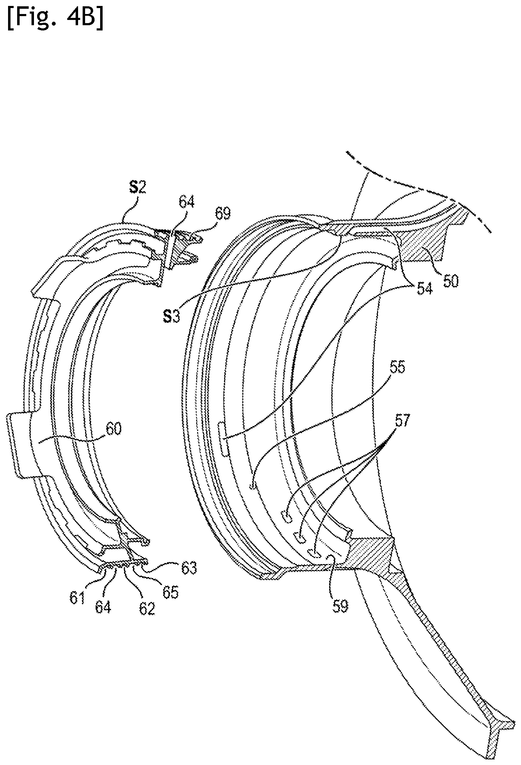

   Les figures 3, 4A et 4B sont des représentations schématiques d'une structure statorique selon l'invention.
[Fig. 5]
   [Fig. 6]
   [Fig. 7]

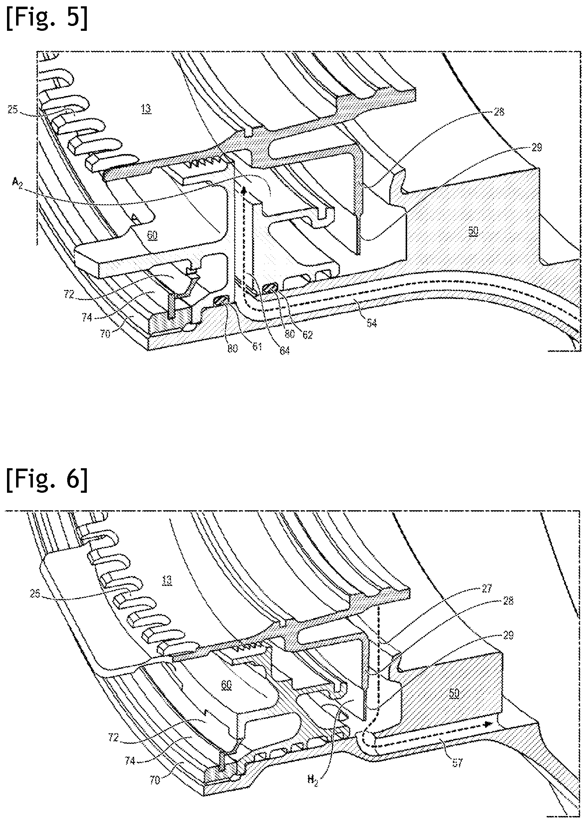

   Les figures 5, 6 et 7 sont des détails de coupes de la structure statorique selon différents angles.

### DESCRIPTION DETAILLEE DE L'INVENTION

La figure 2 est une représentation schématique de la zone d'une turbomachine située entre le disque de soufflante 2 et la boite de réduction de vitesse 12. Une structure statorique 22 rigidement liée au stator 14 de la turbomachine s'étend autour de l'axe Δ. Dans la direction radiale à l'axe Δ, la structure statorique 22 ne s'étend pas à partir de l'axe Δ, de sorte que la structure statorique 22 laisse libre l'axe Δ. Dans la direction axiale de l'axe Δ, une partie au moins de la structure statorique 22 se situe entre le disque de soufflante 2 et le palier P1.

### Support de palier

La structure statorique 22 comprend un support de palier 50 représenté à la figure 3.

Le support de palier 50 comprend un tronçon amont 50A et un tronçon aval constitué d'une partie centrale 50C et d'une partie extérieure 50B.

Dans cette description, les termes amont et aval sont définis par référence à un sens d'écoulement de gaz dans la turbomachine en fonctionnement.

Le tronçon amont 50A du support de palier 50 se situe à l'amont du tronçon aval, de la partie extérieure 50B et de la partie centrale 50C. Il se situe dans le prolongement de la partie extérieure 50B et en est solidaire.

Le tronçon amont 50A présente une forme approximativement annulaire s'étendant autour de l'axe Δ.

Il présente une surface interne 59, représentée à la figure 4B, qui s'étend autour de l'axe Δ. La surface interne 59 est de forme sensiblement cylindrique et est centrée sur l'axe Δ.

Elle définit un logement dans le tronçon amont 50A du support de palier 50, le logement étant ouvert vers l'amont du support de palier 50.

La partie centrale 50C est adaptée pour loger un palier P1 assurant une liaison pivot autour de l'axe Δ d'un arbre de soufflante 13 avec la structure statorique 22.

Un organe de lubrification 24 peut être fixé à la partie centrale 50C dans le voisinage du palier P1. Il peut être orienté de sorte à diffuser du lubrifiant 26 en direction du palier P1.

La partie extérieure 50B du tronçon aval du support de palier 50 s'étend autour de de la partie centrale 50C par rapport à l'axe Δ. Elle présente une forme conique qui s'écarte de l'axe Δ dans la direction aval.

La partie extérieure 50B est solidaire de la partie centrale 50C.

Le support de palier 50 comprend plusieurs canaux.

Chaque canal peut s'étendre dans un plan radial comprenant l'axe Δ.

Chaque canal passe dans le tronçon amont 50A puis dans la partie extérieure 50B du tronçon aval du support de palier 50.

Chaque canal est débouchant à la surface interne 59 et y définit une ouverture interne.

Chaque canal peut présenter une section de forme oblongue allongée selon une direction circonférentielle à l'axe. Autrement dit dans un plan orthogonal à l'axe, le canal présente une section de forme allongée dans la direction perpendiculaire à la direction radiale.

Chaque ouverture interne peut de la même manière présenter une forme oblongue allongée selon une direction circonférentielle à l'axe.

En particulier le canal peut présenter une section qui est plus allongée dans la direction circonférentielle que dans la direction radiale. Cet allongement est choisi dans la limite des lois de perte de charge connues de l'homme du métier que cela entraîne, au bénéfice de la compacité radiale du support de palier. Ces formes complexes peuvent être obtenues par fonderie ou fabrication additive.

Chaque canal est orienté au niveau de l'ouverture interne selon une direction comprenant une composante radiale à l'axe, c'est-à-dire une composante radiale non nulle. Autrement dit, au niveau de l'ouverture interne, la direction suivie par le canal est la direction radiale à l'axe, ou bien une direction présentant un angle différent d'un angle droit par rapport à la direction radiale à l'axe.

La direction du canal au niveau de l'ouverture interne peut être définie par exemple par une tangente au canal déterminée au niveau de l'ouverture interne. A cet effet, il est possible de définir des centrés géométriques de sections du canal, et une ligne courbe qui passe par ces centres. Une telle ligne courbe permet de définir la direction du canal. La direction du canal au niveau de l'ouverture interne peut être définie par exemple par la tangente à cette ligne courbe déterminée au niveau de l'ouverture interne.

En s'éloignant de l'ouverture interne, le canal peut présenter un coude vers l'aval et s'étendre selon la direction de l'axe vers l'aval.

Les canaux peuvent être répartis en plusieurs groupes de canaux selon les fonctions à réaliser, les canaux d'un même groupe communiquant entre eux.

Les canaux d'un même groupe définissent des ouvertures internes qui sont alignées dans une direction circonférentielle à l'axe. Elles peuvent être réparties de manière régulière autour de l'axe, c'est-à-dire que l'écart angulaire entre deux ouvertures successives est sensiblement constant, c'est-à-dire constant à plus ou moins 10%. De plus, les ouvertures internes de canaux d'un même groupe peuvent présenter les mêmes dimensions.

Dans la description qui suit, trois groupes de canaux sont présentés. On distingue un premier groupe de canaux dits canaux d'air de pressurisation 54, un deuxième groupe de canaux dits canaux de drainage d'huile 55, et un troisième groupe de canaux dits canaux de récupération d'huile 57.

Au moins un entre le groupe de canaux d'air de pressurisation 54 et le groupe de canaux dits canaux de drainage d'huile 55 est présent dans le mode de réalisation, mais il n'est pas nécessaire que ces deux groupes soient simultanément présents dans la structure statorique. En particulier la structure statorique peut être réalisée sans le premier groupe de canaux dits canaux d'air de pressurisation 54.

Le premier groupe des canaux d'air de pressurisation 54 définit des ouvertures internes qui peuvent être situées en amont dans la surface interne 59 d'ouvertures internes définies par les canaux d'huile 55.

Il est à noter que le deuxième groupe de canaux de drainage d'huile 55 peut comporter éventuellement un seul canal. Dans ce cas l'ouverture interne du canal de drainage est située en dessous de l'axe de la turbomachine par rapport à la verticale quand la turbomachine est installée dans un aéronef. L'ouverture interne du canal de drainage est située sous l'axe de la turbomachine. Elle est située à l'aplomb de l'axe ou proche de l'aplomb de l'axe. Par exemple l'angle formé dans un plan vertical orthogonal à l'axe de la turbomachine, entre la verticale passant par l'axe et la direction passant par l'axe et l'ouverture interne peut être compris entre -10° à +10°.

Le troisième groupe de canaux 57 formé par les canaux de récupération d'huile définit des ouvertures qui sont situées plus en aval que les ouvertures internes définies par les canaux de drainage d'huile.

Il est à noter que le support de palier peut comprendre un seul canal de récupération d'huile. Dans ce cas, l'ouverture du canal est située en dessous de l'axe de la turbomachine par rapport à la verticale quand la turbomachine est installée dans un aéronef. Par exemple l'angle formé dans un plan vertical orthogonal à l'axe de la turbomachine, entre la verticale passant par l'axe et la direction passant par l'axe et l'ouverture du canal peut être compris entre -10° à +10.

En variante, le canal de récupération d'huile peut être divisé en trois sous-canaux au voisinage de la surface interne. Chaque sous-canal débouche dans la surface interne selon trois sous-ouvertures. Ceci est avantageux pour l'écoulement de fluide même en cas de roulis de l'avion.

Il a été représenté de manière schématique sur la figure 3 différents écoulements dans différents groupes de canaux sur une même vue et dans un même plan. Les positions dans la direction axiale et radiale de ces canaux sur la figure 3 ont été représentées de manière plus précise que leurs positions dans la direction circonférentielle.

En effet, les groupes de canaux sont en fait répartis angulairement autour de l'axe de la turbomachine pour ne pas se superposer. Le plan radial comprenant l'axe Δ dans lequel s'étend un canal est différent d'un canal à un autre. La figure 4B permet de voir dans une vue en perspective un exemple de de canaux d'air de pressurisation 54, des canaux de drainage d'huile 55, et des sous-canaux de récupération d'huile 57 décalés angulairement autour de l'axe de la turbomachine.

### Flasque

La structure statorique 22 comprend un flasque 60 qui présente une forme annulaire centrée sur l'axe Δ. Le flasque 60 définit une surface externe 69 qui s'étend autour de l'axe Δ et qui est sensiblement cylindrique et centrée sur l'axe Δ.

La surface externe 69 a un diamètre légèrement inférieur au diamètre de la surface interne 59, de sorte que le flasque peut être agencé dans le logement du support de palier 50. Les figures 4A et 4B représentent le flasque 60 respectivement dans le logement et en dehors du logement.

Le support de palier 50 s'étend autour du flasque 60 par référence à l'axe.

La surface interne 59 et la surface externe 69 sont en regard l'une de l'autre. La surface interne 59 présente une longueur axiale, mesurée dans la direction de l'axe Δ, inférieure à une longueur axiale du logement. Le support de palier 50 s'étend également plus en amont de la surface interne 59 par référence à l'axe.

Le flasque 60 comprend une surface S1 située à l'extrémité aval de la surface extérieure 69 du flasque. Le flasque est agencé dans le logement du support de palier 50 de sorte que la surface aval S1 est située en amont des ouvertures internes des canaux de récupération d'huile 57 du support de palier. De cette manière, le flasque 60 ne couvre pas les ouvertures internes des canaux de récupération d'huile 57.

Le flasque 60 comprend plusieurs canaux.

Chaque canal s'étend dans un plan radial comprenant l'axe Δ.

Chaque canal traverse le flasque 60 depuis la surface extérieure 69 jusqu'à une surface radiale interne.

Les canaux du flasque 60 étant situés globalement en amont des canaux du support de palier, ils peuvent être désignés par « canaux amont » en comparaison des canaux du support qui sont eux désignés par « canaux aval ». Chaque canal amont débouche à la surface externe 69 et définit dans celle-ci une ouverture externe.

Chaque canal amont peut présenter une section de forme oblongue allongée selon la direction circonférentielle. Autrement dit dans un plan orthogonal à l'axe, le canal amont présente une section de forme allongée dans la direction perpendiculaire à la direction radiale.

Chaque ouverture externe peut de la même manière présenter une forme oblongue allongée selon la direction circonférentielle.

En particulier le canal amont peut présenter une section qui est plus allongée dans la direction circonférentielle que dans la direction radiale. Cet allongement est choisi dans la limite des lois de perte de charge connues de l'homme du métier que cela entraîne, au bénéfice de la compacité radiale du support de palier

Ces formes complexes peuvent être obtenues par fonderie ou fabrication additive.

Chaque canal amont est orienté au niveau de l'ouverture externe selon une direction comprenant une composante radiale, c'est-à-dire une composante radiale non nulle. Autrement dit, au niveau de l'ouverture externe, la direction suivie par le canal amont est la direction radiale à l'axe, ou bien une direction présentant un angle différent d'un angle droit par rapport à la direction radiale à l'axe. La direction du canal amont au niveau de l'ouverture externe peut être définie par exemple par une tangente au canal amont au niveau de l'ouverture externe, en particulier la tangente à la ligne courbe définie par les centres géométriques de sections du canal amont.

Cette direction suivie par le canal amont au niveau de l'ouverture externe peut être la direction radiale.

Les canaux amont peuvent être répartis en deux groupes, les canaux amont d'un même groupe peuvent communiquer entre eux.

Les canaux amont d'un même groupe définissent des ouvertures externes qui sont alignées dans la direction circonférentielle. Elles peuvent être réparties de manière régulière autour de l'axe, c'est-à-dire que l'écart angulaire entre deux ouvertures externes successives est sensiblement constant, c'est-à-dire constant à plus ou moins 10%. De plus, les ouvertures externes de canaux amont d'un même groupe peuvent présenter les mêmes dimensions.

Un premier groupe de canaux amont dits canaux amont de pressurisation d'air 64 définit des ouvertures externes qui peuvent être situées en amont dans la surface externe 69 d'ouvertures externes définies par les canaux amont dits canaux amont de drainage d'huile 65 du deuxième groupe de canaux amont.

Au moins un de ces groupes de canaux est présent dans le mode de réalisation, mais il n'est pas nécessaire que tous les groupes de canaux soient présents dans la structure statorique. En particulier la structure statorique peut être réalisée sans le premier groupe de canaux dits canaux amonts d'air de pressurisation 64.

L'agencement du flasque dans le logement du support de palier est tel que :
- les ouvertures externes des canaux amont d'air 64 sont situées en regard des ouvertures internes des canaux aval d'air 54, et
- les ouvertures externes des canaux amont d'huile 65 sont situés en regard des ouvertures internes des canaux aval de drainage d'huile 55.

La position angulaire du flasque est fixée par un dispositif anti-erreur ou dispositif 58, pour respecter la bonne position du canal de drainage qui doit se trouver en partie basse.

Un couple formé d'une ouverture externe et d'une ouverture interne en regard l'une de l'autre définit une direction d'écoulement qui comprend une composante radiale à l'axe. La direction d'écoulement est la direction radiale à l'axe, ou bien une direction présentant un angle différent d'un angle droit par rapport à la direction radiale à l'axe

La direction suivie par le canal amont au niveau de l'ouverture externe et la direction suivie par le canal aval au niveau de l'ouverture interne peuvent être identiques et définir ainsi la direction d'écoulement entre l'ouverture externe et l'ouverture interne.

La direction suivie par le canal amont au niveau de l'ouverture externe et la direction suivie par le canal aval au niveau de l'ouverture interne peuvent être différentes. La direction d'écoulement correspond à une direction comprise entre la direction d'orientation du canal aval au niveau de l'ouverture interne et la direction d'orientation du canal amont à partir de l'ouverture externe.

Le flasque 60 peut comprendre trois gorges d'étanchéité.

Une première gorge d'étanchéité 61 peut être située en amont des ouvertures externes des canaux amont d'air 64.

Une deuxième gorge d'étanchéité 62 peut être située entre les ouvertures externes des canaux amont d'air 64 et les ouvertures externes des canaux amont de drainage d'huile 65.

Une troisième gorge d'étanchéité 63 peut être située en aval des ouvertures externes des canaux amont d'air 65.

Chaque gorge d'étanchéité peut être annulaire, centrée sur l'axe et définie dans la surface externe 69.

Chaque gorge d'étanchéité peut être ouverte en direction du support de palier 50.

Chaque gorge d'étanchéité est adaptée pour être occupée par un joint d'étanchéité 80 par exemple de type joint torique qui est en contact avec le support de palier 50.

En présence de ces joints d'étanchéité 80 :
- les passages entre les canaux amont d'air et les canaux aval d'air sont isolés des autres canaux, et
- les passages entre les canaux amont de drainage d'huile et les canaux aval de drainage d'huile sont isolés des autres canaux.

Le flasque peut également comporter une gorge d'air dans la surface externe, les canaux amont d'air débouchant dans la gorge d'air.

Il peut également comporter une gorge d'huile dans la surface externe, les canaux amont de drainage débouchant dans la gorge d'huile.

Les canaux amont d'air 64 peuvent être constamment orientés selon une direction radiale à l'axe.

Les canaux amont d'air 64 débouchent dans la surface radiale interne du flasque 60 et définissent des ouvertures d'air dans celle-ci. Les ouvertures d'air peuvent être alignées dans la direction circonférentielle. Elles peuvent être réparties de manière régulière autour de l'axe.

Les canaux amont de drainage d'huile 65 peuvent être orientés selon une direction oblique par rapport à l'axe de sorte que les canaux amont de drainage 65 s'approchent de l'axe Δ dans la direction amont.

Les canaux amont de drainage 65 débouchent dans la surface radiale interne du flasque 60 et y définissent des ouvertures de drainage. Ces dernières peuvent être alignées dans la direction circonférentielle. Elles peuvent être réparties de manière régulière autour de l'axe.

Les ouvertures d'air et les ouvertures de drainage peuvent être alignées dans une même direction circonférentielle à l'axe. Dans ce cas, il est possible d'utiliser la configuration suivante dans laquelle le flasque comprend
- un seul canal amont de drainage 65 qui définit une ouverture interne de drainage située sous l'axe de la turbomachine par rapport au sol ;
- trois canaux amont d'air 64 qui définissent trois ouvertures internes d'air réparties de manière régulière autour de l'axe avec une ouverture d'air au-dessus l'axe de la turbomachine par rapport au sol. Cette ouverture d'air est par exemple située à l'aplomb de l'axe au-dessus de l'axe, c'est-à-dire diamétralement opposée à l'ouverture de drainage.

Il est à noter que le deuxième groupe de canaux amont de drainage peut comporter éventuellement un seul canal. C'est le cas notamment lorsque le support de palier ne comprend qu'un seul canal aval de drainage.

Il est possible de fixer à l'amont du flasque 60 un dispositif tachymétrique 23. Ce dernier peut être orienté dans la direction radiale de sorte à mesurer la vitesse de rotation de l'arbre de soufflante 13.

### Fixation du flasque au support de palier

La structure statorique 22 comprend un organe de fixation 70 du flasque 60 au support de palier 50. Cet organe peut être une pièce annulaire centrée sur l'axe.

Le support de palier peut comprendre un rebord S3 qui est une surface située à l'amont de la surface interne 59. Le rebord S3 est une surface verticale de forme annulaire qui s'étend radialement en s'éloignant de l'axe de la turbomachine à partir de la surface interne 59.

Le flasque peut comprendre une collerette S2 située en amont de la surface externe 69 et qui fait saillie radialement en s'éloignant de l'axe à partir de la surface externe 69.

La collerette S2 est en butée contre le rebord S3.

L'organe de fixation 70 peut être un écrou vissé dans la portion amont 50A du support de palier 50. Un filetage interne centré sur l'axe peut être réalisé dans le tronçon amont 50A en amont du rebord S3, et en amont de la collerette S2. L'organe de fixation est placé grâce au filetage interne en amont de la collerette S2. Celle-ci est en appui côté aval contre le rebord S3 et côté amont contre l'organe de fixation 70.

Une bague d'arrêt axial d'écrou 74 et un frein d'écrou 72 sont aptes à s'opposer à une rotation de l'écrou par rapport au support de palier empêche l'écrou de se desserrer accidentellement. Le frein d'écrou 72 est une rondelle avec des dents externes 72A et des dents internes 72B. Les dents externes 72A coopèrent avec des encoches de l'écrou 70 et les dents internes 72B avec des encoches du flasque 60. Le frein d'écrou 72 est installé après serrage de l'écrou 70, et maintenu en place par l'installation de la bague d'arrêt axial 74, qui peut être par exemple un anneau élastique, dans une gorge de l'écrou 70.

En variante, le flasque 60 ne comporte pas de collerette S2 à son extrémité amont et se trouve en butée dans le support de palier du côté de son extrémité aval. A l'extrémité amont du flasque, une rainure annulaire est réalisée dans le support de palier. La rainure est creusée dans la surface interne 59 et elle est ouverte en direction de l'axe. L'organe de fixation 70 est formé de deux demi-bagues et d'un anneau de rétention. Les deux demi-bagues occupent la rainure de sorte à maintenir le flasque 60 contre le support de palier 50. L'anneau de rétention peut être fixé au flasque de sorte à maintenir les demi-bagues dans la rainure. Il peut être fixé au flasque 60 par des vis montées dans des trous taraudés du flasque 60.

La structure statorique 22 peut comprendre un dispositif anti-erreur 58 agencé pour assurer une position angulaire prédéterminée du flasque par rapport au support de palier lors du montage du support statorique. Le dispositif anti-erreur 58 permet de garantir au montage une position angulaire précise du flasque 60 par rapport au support de palier 50.

Le dispositif anti-erreur 58 peut notamment être un moyen de détrompage angulaire de montage connu de l'homme du métier, comme par exemple un système tenon / encoche ou des pattes radiales disposées sur le support de palier 50 en correspondance à des encoches dans le flasque 60. Les encoches et les pattes définissent des secteurs angulaires d'étendue radiale déterminée. Le dispositif anti-erreur 58 peut par exemple comprendre des encoches disposées à l'aval du flasque, sur la surface aval S1 du flasque et orthogonale à l'axe Δ. Les encoches disposées sur la surface S1 sont en contact et collaborent avec des tenons portés par le support de palier. Plus précisément les tenons peuvent être en saillie à partir de la surface 51 du support de palier, la surface 51 étant orthogonale à l'axe et en regard avec la surface S1.

### Arbre de soufflante

L'arbre de soufflante 13 passe au travers de la structure statorique qui laisse libre l'axe de la turbomachine. L'arbre de soufflante 13 s'étend en amont de la structure statorique où l'arbre est relié au disque de soufflante 2.

Au niveau du flasque, l'arbre de soufflante peut présenter deux parties annulaires qui s'étendent autour de l'axe.

La première 15 s'étend autour de l'axe en amont des ouvertures de drainage et des ouvertures d'air.

Elle peut notamment comprendre une extrémité amont dentée 25. Cette extrémité amont 25 peut être située en face du dispositif tachymétrique 23. Elle collabore avec le dispositif tachymétrique pour permettre une mesure d'une vitesse de rotation de l'arbre de soufflante.

La première partie annulaire 15 peut également comprendre des léchettes 16 d'un premier joint à labyrinthe dynamique J1. Le flasque 60 peut comprendre une saillie annulaire 32 qui vient s'étendre axialement devant les léchettes de sorte à former le joint dynamique J1. La saillie annulaire 32 peut comporter une gorge recevant un matériau abradable 34 en vis-à-vis des léchettes 16. Le premier joint dynamique J1 se situe en amont des ouvertures de drainage et des ouvertures d'air.

Une deuxième partie annulaire 17 de l'arbre de soufflante 13 s'étend autour de l'axe en aval des ouvertures de drainage et des ouvertures d'air.

La deuxième partie annulaire 17 peut interagir avec une portion 30 du flasque 60 de façon à former un deuxième joint dynamique J2. Le deuxième joint dynamique J2 se situe en aval des ouvertures de drainage et des ouvertures d'air. Le deuxième joint dynamique J2 peut être un joint radial segmenté (ou JRS) par exemple comprenant du carbone. Ce joint peut être protégé de l'huile par une vrille en aval, la vrille étant portée par la portion 30 du flasque 60.

La deuxième partie annulaire peut comprendre plus en aval du deuxième joint dynamique J2 un déflecteur 28 qui s'étend radialement en s'éloignant de l'axe vers les ouvertures internes des canaux de récupération d'huile 57.

Le déflecteur 28, solidaire de l'arbre de soufflante 13, est apte à être entraîné par l'arbre de soufflante 13.

Le déflecteur 28 peut comprendre une extrémité radiale externe 29 située en regard de l'ouverture du canal ou des canaux de récupération d'huile. L'extrémité radiale externe s'étend radialement vers l'ouverture du canal ou des canaux de récupération d'huile et perpendiculairement à cette ouverture.

En aval du deuxième joint dynamique J2, le support de palier 50 et le flasque sont écartés de l'arbre de soufflante 13. Cet espace définit une enceinte, appelée enceinte à huile H2. Le canal ou les canaux de récupération 57 du support de palier 50 débouchent à la surface interne 59 dans cette enceinte à huile H2.

Le palier P1 et l'organe de lubrification 24 délimitent le périmètre de l'enceinte à huile H2. Le déflecteur 28 délimite également ce périmètre.

Entre les deux joints dynamiques J1 et J2, le flasque 60 est écarté de l'arbre de soufflante 13. Cet espace définit une enceinte, appelée enceinte d'air A2.

Les canaux amont d'air 64 et le ou les canaux amont de drainage 65 sont en communication avec l'enceinte d'air A2. Chaque canal amont traverse le flasque 60 depuis l'enceinte d'air A2 jusqu'à la surface externe.

L'enceinte d'air A2 est séparée de l'enceinte à huile H2 par le deuxième joint J2 dynamique.

L'espace situé en amont du premier joint dynamique J1 définit une enceinte appelée enceinte soufflante A1.

### Fonctionnement

En fonctionnement, l'arbre de soufflante 13 tourne autour de l'axe et la structure statorique 22 reste fixe. Les premier et deuxième joints dynamiques isolent l'enceinte à huile H2 et l'enceinte d'air A2.

Le flasque 60 démontable et compact permet un accès simple au deuxième joint dynamique J2 qui est une pièce d'usure. Il permet aussi de réaliser une étanchéité de l'enceinte à huile H2 au regard de la cavité du disque contenant de l'air qui n'est pas sous pression (sensiblement à la pression ambiante de la soufflante).

Lorsque du lubrifiant -ou de l'huile- est projeté vers le palier P1 par l'organe de lubrification, le lubrifiant vient occuper l'enceinte à huile H2. Il est nécessaire de recycler ce lubrifiant ou cette huile.

Le déflecteur 28 sert notamment à orienter le lubrifiant qui occupe l'enceinte à huile vers le canal ou les canaux de récupération 57. Le lubrifiant, selon le parcours référencé 27 sur la figure 6, ruisselle le long du déflecteur 28 en s'éloignant de l'axe et passe dans les canaux de récupération 57.

L'extrémité radiale externe 29 du déflecteur 28 est située au droit de l'ouverture du canal ou des canaux de récupération d'huile de sorte que de l'huile s'écoule le long du déflecteur vers le canal de récupération d'huile.

Le lubrifiant suit le canal ou les canaux de récupération 57 pour être réutilisé ultérieurement.

Le canal ou les canaux de récupération 57 définissent un circuit de récupération d'huile ou de lubrifiant. Le circuit de récupération d'huile comporte au moins un canal de récupération d'huile situé à l'aplomb de l'axe ou proche de l'aplomb de l'axe. En variante, le canal de récupération d'huile situé sous l'axe de la turbomachine peut être divisé en trois sous-canaux au voisinage de la surface interne. Chaque sous-canal débouche dans la surface interne selon trois sous-ouvertures. Ceci est avantageux pour l'écoulement de fluide même en cas de roulis de l'avion.

L'enceinte d'air A2 est séparée de l'enceinte à huile H2 par le deuxième joint J2 dynamique, mais il est possible que l'huile présente dans l'enceinte à huile traverse le deuxième joint dynamique et occupe l'enceinte d'air A2, en cas de défaillance du joint dynamique J2 ou dans certaines attitudes avion tel un piqué.

Cette huile présente dans l'enceinte d'air peut alors être évacuée de l'enceinte d'air A2 par le canal amont de drainage 65. L'huile est transportée de ce canal vers le canal aval de drainage 55 à travers la surface externe 69 et la surface interne 59.

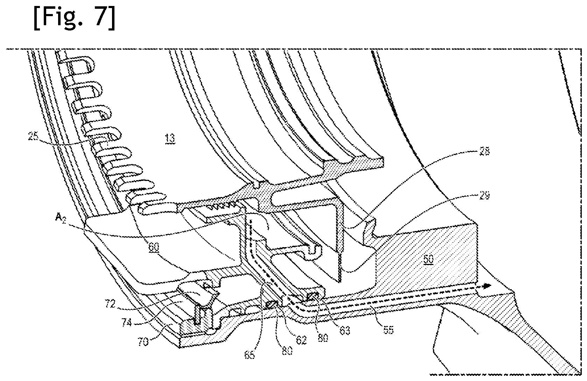

Le canal amont de drainage 65 et le canal aval de drainage 55 définissent un circuit d'huile ou circuit de drainage d'huile apte à évacuer l'huile présente dans l'enceinte d'air A2. La ligne pointillée de la figure 7 représente le parcours de l'huile extraite de la cavité d'air A2 par le circuit de drainage.

Le circuit de drainage d'huile peut éventuellement comporter un seul couple canal amont/canal aval de drainage. L'ouverture interne et l'ouverture externe sont alors situées sous l'axe de la turbomachine par rapport au sol.

L'enceinte d'air A2 est alimentée en air pour y assurer une pression suffisamment importante. L'enceinte A2 est pressurisée de sorte que l'enceinte d'huile H2 est sous plus haute pression que l'enceinte soufflante A1 dans laquelle se situe le disque de soufflante. De cette manière, la différence de pression entre l'enceinte A2 et l'enceinte H2 est faible ce qui améliore l'étanchéité du joint dynamique J2.

Dans la configuration où le flasque comprend un seul canal amont de drainage 65 et trois canaux amont d'air 64, si de l'huile est présente dans l'enceinte d'air A2, cette huile s'écoule naturellement vers et à travers l'ouverture interne de drainage en partie basse. Les trois ouvertures internes d'air se situant plus en hauteur que cette ouverture de drainage, l'huile ne peut pas les atteindre à cause de la force de gravité. De plus ces ouvertures d'air soufflent de l'air ce qui empêche à plus forte raison l'huile d'y pénétrer.

L'air est acheminé vers l'enceinte A2 via un circuit d'air formé des canaux aval d'air 54 et des canaux amont d'air 64. La ligne pointillée de la figure 5 représente le parcours de l'air acheminé par le circuit de ventilation.

Le circuit de ventilation peut comporter 3 ou 4 couples de canaux aval/amont d'air. Ces couples sont répartis angulairement le plus équitablement possible, afin d'homogénéiser dans la direction circonférentielle la pression au niveau des premiers et deuxièmes joints à labyrinthe J1 et J2 situés à l'extrémité de l'enceinte.

Le flasque 60 permet le montage du premier joint dynamique J1. Il permet aussi de définir une enceinte d'air A2 séparée de l'enceinte soufflante A1 et de réaliser une étanchéité de l'enceinte d'air A2.

Au moins un parmi le circuit de drainage d'huile et le circuit de ventilation est présent dans le mode de réalisation, mais il n'est pas nécessaire que les deux circuits soient simultanément présents dans la structure statorique. En particulier la structure statorique peut être réalisée sans le circuit de ventilation.

### Effets techniques

Dans la structure statorique 22, le support de palier 50 et le flasque 60 sont agencés de sorte à assurer une fixation de l'un à l'autre en amont du flasque, le support de palier entourant le flasque. Cela permet une fixation par contrainte mécanique dans l'axe de la turbomachine. Cela permet également une fixation qui s'inscrit à l'intérieur du diamètre extérieur de la partie amont du support de palier 50. Un agencement dans lequel l'extrémité aval du flasque est en butée contre l'extrémité amont du support de palier nécessiterait une fixation de ces pièces à leur interface, ce qui entrainerait un encombrement radial plus important autour de ces deux pièces.

Le support de palier 50 et le flasque 60 sont agencés de sorte que, à l'interface entre un canal amont et un canal aval en communication l'un avec l'autre, la direction du circuit de fluide formé par ces canaux est la direction radiale à l'axe, ou bien une direction présentant un angle différent d'un angle droit par rapport à la direction radiale à l'axe. Le circuit de fluide est dirigé à cet endroit dans une direction comprenant une composante non nulle selon une direction radiale à l'axe. Cela permet de réaliser au niveau de cette interface une étanchéité du circuit en utilisant deux joints orientés de manière orthogonale à l'axe, un joint étant situé en amont de l'interface et un joint étant situé en aval. Par exemple il est possible d'utiliser deux joints annulaires centrés sur l'axe. Cet agencement permet de réduire l'encombrement radial par rapport à un agencement où la direction du circuit de fluide formé par les canaux aval/amont est la direction de l'axe de la turbomachine à l'interface entre les canaux aval/amont : il serait alors nécessaire de placer le joint autour de l'interface.

La structure statorique permet en particulier de diminuer l'encombrement radial par rapport à des agencements où, entre le flasque et le support de palier, on utilise une bride pour assurer d'une part l'étanchéité des différents circuits de ventilation, de drainage et de récupération et d'autre part la fixation entre ces deux pièces. Une telle structure statorique peut être utilisé dans un moteur à réducteur, mais elle peut aussi s'appliquer à un moteur de type « Direct Drive » en anglais ou « entraînement direct » en français c'est à dire sans réducteur. Dans la structure statorique 22, le support de palier 50 et le flasque 60 peuvent présenter des canaux, en particulier les canaux d'air, ayant des sections dans un plan orthogonal à l'axe de forme oblongue allongée dans la direction circonférentielle. L'encombrement radial des différents circuits intégrés au support de palier peut ainsi être diminué. Cette forme particulière des canaux, lorsqu'elle respecte les formules d'équivalence telles que le diamètre hydraulique ou le diamètre équivalent, connues de l'homme du métier, n'engendre pas une perte de charge dans les circuits.

Le support de palier 50 et le flasque 60 sont agencés de sorte que le circuit de récupération d'huile ne passe pas par le flasque. Seul le support de palier est traversé par les canaux de récupération d'huile. Cet agencement permet de gagner en encombrement radial par rapport à des situations où le flasque est traversé par le circuit de récupération d'huile.

Le jeu radial entre le disque de soufflante 2 et le support de palier 50 est noté J sur la figure 2. Il peut atteindre une longueur supérieure à 20 millimètres. Il peut être deux fois plus important que pour des agencements utilisant une bride pour assurer d'une part l'étanchéité des différents circuits air et huile et d'autre part la fixation entre le flasque et le support de palier.

L'espace radial rendu disponible par la structure statorique peut servir à améliorer le rapport de moyeu de la soufflante au bénéfice de la performance globale du moteur, tout en conservant une marge acceptable vis-à-vis des déformations potentielles des pièces lors d'un évènement moteur tel qu'une perte d'aube.

## Revendications

1. Structure statorique (22) pour une turbomachine, la structure statorique (22) s'étendant autour d'un axe en correspondance d'un axe de la turbomachine (Δ) et comprenant :
- un support (50) adapté pour loger un palier d'arbre de soufflante, délimitant une enceinte à huile (H2) et présentant une surface interne (59) centrée sur l'axe (Δ), et
- un flasque (60) délimitant l'enceinte à huile (H2) et une enceinte d'air (A2) et présentant une surface externe (69) centrée sur l'axe (Δ),
le support (50) s'étendant autour du flasque (60) de sorte que les surfaces interne et externe sont en regard l'une de l'autre,
la structure (22) définissant un circuit d'huile formé par au moins un canal amont (65) et un canal aval (55) par référence à un sens d'écoulement de gaz dans la turbomachine en fonctionnement, et un circuit d'air formé par au moins deux canaux amont (64) et deux canaux aval (54),
- chaque canal amont (64, 65) traversant le flasque (60), depuis l'enceinte d'air (A2) jusqu'à la surface externe (69) en définissant une ouverture externe dans la surface externe (69),
- chaque canal aval (54, 55) s'étendant à l'intérieur du support (50) et débouchant à la surface interne (59) en définissant une ouverture interne située en regard de l'ouverture externe,
chaque circuit étant orienté entre les ouvertures externe et interne selon une direction comprenant une composante radiale à l'axe (Δ).

2. Structure statorique selon la revendication 1 dans laquelle les ouvertures des canaux (54, 64) du circuit d'air se situent en amont des ouvertures du circuit d'huile.

3. Structure statorique selon la revendication 1 ou 2 dans laquelle, pour chaque circuit, les ouvertures des canaux (54, 55, 64, 65) sont réparties dans une direction circonférentielle autour de l'axe (Δ).

4. Structure statorique selon l'une quelconque des revendications 1 à 3 dans laquelle les ouvertures des canaux (54, 64) du circuit d'air sont réparties de manière régulière dans une direction circonférentielle autour de l'axe (Δ).

5. Structure statorique selon l'une quelconque des revendications 1 à 4 dans laquelle le support (50) comprend :
- un tronçon amont (50A) définissant la surface interne (59) et
- un tronçon aval (50B, 50C) configuré pour loger le palier,
le flasque (60) comprenant :
- une gorge d'air dans la surface externe (69), les canaux amont (64) du circuit d'air débouchant dans la gorge d'air et
- une gorge d'huile dans la surface externe (69), l'au moins un canal amont (65) du circuit d'huile débouchant dans la gorge d'huile.

6. Structure statorique selon l'une quelconque des revendications 1 à 5, dans laquelle le flasque (60) comprend trois gorges d'étanchéité (61, 62, 63) dans la surface externe (69) respectivement situées en amont des ouvertures des canaux (54, 64) du circuit d'air, entre les ouvertures des canaux (54, 64) du circuit d'air et les ouvertures des canaux (55, 65) du circuit d'huile, et en aval des ouvertures des canaux (55, 65) du circuit d'huile, chaque gorge (61, 62, 63) d'étanchéité étant occupée par un joint (80) en contact avec le support (50).

7. Structure statorique selon l'une quelconque des revendications 1 à 6 dans laquelle les canaux (54, 55, 64, 65) présentent une section allongée selon la direction circonférentielle.

8. Structure statorique selon l'une quelconque des revendications 1 à 7 dans laquelle, le circuit d'huile étant un circuit de drainage, la structure (22) définit en outre un circuit de récupération d'huile composé d'au moins un canal (57) s'étendant à l'intérieur du support (50) depuis une ouverture interne définie dans la surface interne (59) par le canal (57), l'ouverture interne étant en aval du flasque (60) et faisant déboucher le canal (57) dans l'enceinte d'huile (H2) selon une direction comprenant une composante radiale.

9. Structure statorique selon la revendication 8 dans laquelle le canal (57) du circuit de récupération présente une section allongée selon la direction circonférentielle.

10. Structure statorique selon l'une quelconque des revendications 1 à 9, comprenant, en amont du flasque (60), un organe de fixation du flasque (60) au support (50).

11. Structure statorique selon l'une quelconque des revendications 1 à 10 comprenant un dispositif anti-erreur agencé pour assurer une position angulaire prédéterminée du flasque (60) par rapport au support (50).

12. Turbomachine comprenant une structure statorique selon l'une des revendications précédentes.

13. Turbomachine comprenant une structure statorique selon la revendication 8 ou 9 et comprenant en outre :
- un arbre de soufflante (13) apte à entraîner un disque de soufflante (2),
- un palier (P1) d'arbre de soufflante délimitant l'enceinte à huile (H2) et reliant la structure statorique (22) et l'arbre (13), et
- un déflecteur (28) délimitant l'enceinte à huile (H2), apte à être entraîné par l'arbre (13 ) et s'étendant radialement vers l'ouverture du canal (57) du circuit de récupération,
une extrémité radiale externe (29) du déflecteur (28) étant située en regard de l'ouverture de sorte que de l'huile peut s'écouler le long du déflecteur (28) vers le canal (57) du circuit de récupération.

14. Aéronef comprenant au moins une turbomachine selon l'une des revendications 12 ou 13.

## Patentansprüche

1. Statorstruktur (22) für eine Turbomaschine, wobei sich die Statorstruktur (22) um eine Achse erstreckt, die in Übereinstimmung mit einer Achse der Turbomaschine (Δ) ist, und umfasst:
- einen Träger (50), der zur Aufnahme eines Gebläsewellenlagers geeignet ist, eine Ölkammer (H2) begrenzt und eine auf der Achse (Δ) zentrierte Innenfläche (59) aufweist, und
- einen Flansch (60), der die Ölkammer (H2) und eine Luftkammer (A2) begrenzt und eine auf der Achse (Δ) zentrierte Außenfläche (69) aufweist,
wobei sich der Träger (50) um den Flansch (60) derart erstreckt, dass die Innen- und Außenfläche einander zugewandt sind,
wobei die Struktur (22) einen Ölkreis definiert, der aus mindestens einem stromaufwärtigen Kanal (65) und einem stromabwärtigen Kanal (55) in Bezug auf eine Gasströmungsrichtung in der arbeitenden Turbomaschine gebildet ist, und einen Luftkreis, der aus mindestens zwei stromaufwärtigen Kanälen (64) und zwei stromabwärtigen Kanälen (54) gebildet ist,
- wobei jeder stromaufwärtige Kanal (64, 65) den Flansch (60) ab der Luftkammer (A2) bis zu der Außenfläche (69) durchquert, indem eine äußere Öffnung in der Außenfläche (69) definiert wird,
- wobei sich jeder stromabwärtige Kanal (54, 55) in dem Träger (50) erstreckt und auf der Innenfläche (59) ausmündet, indem er eine innere Öffnung definiert, die sich der äußeren Öffnung zugewandt befindet,
wobei jeder Kreis zwischen der äußeren und der inneren Öffnung gemäß einer Richtung ausgerichtet ist, die eine zu der Achse (Δ) radiale Komponente aufweist.

2. Statorstruktur nach Anspruch 1, wobei sich die Öffnungen der Kanäle (54, 64) des Luftkreises stromaufwärts der Öffnungen des Ölkreises befinden.

3. Statorstruktur nach Anspruch 1 oder 2, wobei die Öffnungen der Kanäle (54, 55, 64, 65) für jeden Kreis in einer Umfangsrichtung um die Achse (Δ) verteilt sind.

4. Statorstruktur nach einem der Ansprüche 1 bis 3, wobei die Öffnungen der Kanäle (54, 64) des Luftkreises gleichmäßig in einer Umfangsrichtung um die Achse (Δ) verteilt sind.

5. Statorstruktur nach einem der Ansprüche 1 bis 4, wobei der Träger (50) umfasst:
- einen stromaufwärtigen Abschnitt (50A), der die Innenfläche (59) definiert und
- einen stromabwärtigen Abschnitt (50B, 50C), der zur Aufnahme des Lagers konfiguriert ist,
wobei der Flansch (60) umfasst:
- eine Luftnut in der Außenfläche (69), wobei die stromaufwärtigen Kanäle (64) des Luftkreises in die Luftnut ausmünden und
- eine Ölnut in der Außenfläche (69), wobei mindestens ein stromaufwärtiger Kanal (65) des Ölkreises in die Ölnut ausmündet.

6. Statorstruktur nach einem der Ansprüche 1 bis 5, wobei der Flansch (60) drei Dichtungsnuten (61, 62, 63) in der Außenfläche (69) umfasst, die sich jeweils stromaufwärts der Öffnungen der Kanäle (54, 64) des Luftkreises zwischen den Öffnungen der Kanäle (54, 64) des Luftkreises und den Öffnungen der Kanäle (55, 65) des Ölkreises und stromabwärts der Öffnungen der Kanäle (55, 65) des Ölkreises befinden, wobei jede Dichtungsnut (61, 62, 63) von einer Dichtung (80) in Kontakt mit dem Träger (50) belegt ist.

7. Statorstruktur nach einem der Ansprüche 1 bis 6, wobei die Kanäle (54, 55, 64, 65) gemäß der Umfangsrichtung einen länglichen Querschnitt aufweisen.

8. Statorstruktur nach einem der Ansprüche 1 bis 7, wobei, wenn der Ölkreis ein Drainagekreis ist, die Struktur (22) ferner einen Ölrückgewinnungskreis definiert, der aus mindestens einem Kanal (57) besteht, der sich im Inneren des Trägers (50) ab einer in der Innenfläche (59) durch den Kanal (57) definierten inneren Öffnung erstreckt, wobei die innere Öffnung stromabwärts des Flansches (60) liegt und bewirkt, dass der Kanal (57) gemäß einer Richtung in die Ölkammer (H2) ausmündet, die eine radiale Komponente umfasst.

9. Statorstruktur nach Anspruch 8, wobei der Kanal (57) des Rückgewinnungskreises gemäß der Umfangsrichtung einen länglichen Querschnitt aufweist.

10. Statorstruktur nach einem der Ansprüche 1 bis 9, die stromaufwärts des Flansches (60) eine Einrichtung zum Befestigen des Flansches (60) an dem Träger (50) umfasst.

11. Statorstruktur nach einem der Ansprüche 1 bis 10, die eine Fehlerschutzvorrichtung umfasst, die eingerichtet ist, um eine vorbestimmte Winkelposition des Flansches (60) in Bezug auf den Träger (50) zu gewährleisten.

12. Turbomaschine, die eine Statorstruktur nach einem der vorhergehenden Ansprüche umfasst.

13. Turbomaschine, die eine Statorstruktur nach Anspruch 8 oder 9 umfasst und ferner umfasst:
- eine Gebläsewelle (13), die geeignet ist, eine Gebläsescheibe (2) anzutreiben,
- ein Gebläsewellenlager (P1), das die Ölkammer (H2) begrenzt und die Statorstruktur (22) und die Welle (13) verbindet, und
- einen Ablenker (28), der die Ölkammer (H2) begrenzt, der geeignet ist, von der Welle (13) angetrieben zu werden und sich radial in Richtung der Öffnung des Kanals (57) des Rückgewinnungskreises erstreckt,
wobei sich ein äußeres radiales Ende (29) des Ablenkers (28) der Öffnung zugewandt befindet, so dass das Öl entlang des Ablenkers (28) in Richtung des Kanals (57) des Rückgewinnungskreises fließen kann.

14. Flugzeug, umfassend mindestens eine Turbomaschine nach einem der Ansprüche 12 oder 13.

## Claims

1. A stator structure (22) for a turbomachine, the stator structure (22) extending about an axis in correspondence of an axis of the turbomachine (Δ) and comprising:
- a support (50) adapted to house a fan shaft bearing, delimiting an oil enclosure (H2) and having an inner surface (59) centered on the axis (Δ), and
- a flange (60) delimiting the oil enclosure (H2) and an air enclosure (A2) and having an outer surface (69) centered on the axis (Δ),
the support (50) extending around the flange (60) so that the inner and outer surfaces face each other,
the structure (22) defining an oil circuit formed by at least an upstream channel (65) and a downstream channel (55) with reference to a gas flow direction in the turbomachine in operation, and an air circuit formed by at least two upstream channels (64) and two downstream channels (54),
- each upstream channel (64, 65) passing through the flange (60), from the air enclosure (A2) to the outer surface (69) by defining an outer opening in the outer surface (69),
- each downstream channel (54, 55) extending inside the support (50) and opening out at the inner surface (59) by defining an inner opening located facing the outer opening,
each circuit being oriented between the outer and inner openings along a direction comprising a component radial to the axis (Δ).

2. The stator structure according to claim 1, wherein the openings of the channels (54, 64) of the air circuit are located upstream of the openings of the oil circuit.

3. The stator structure according to claim 1 or 2 wherein, for each circuit, the openings of the channels (54, 55, 64, 65) are distributed in a circumferential direction about the axis (Δ).

4. The stator structure according to any of the preceding claims, wherein the openings of the channels (54, 64) of the air circuit are evenly distributed in a circumferential direction about the axis (Δ).

5. The stator structure according to any of the preceding claims, wherein the support (50) comprises:
- an upstream segment (50A) defining the inner surface (59) and
- a downstream segment (50B, 50C) configured to house the bearing,
the flange (60) comprising:
- an air groove in the outer surface (69), the upstream channels (64) of the air circuit opening out into the air groove and
- an oil groove in the outer surface (69), the at least one upstream channel (65) of the oil circuit opening out into the oil groove.

6. The stator structure according to any of the preceding claims, wherein the flange (60) comprises three sealing grooves (61, 62, 63) in the outer surface (69) respectively located upstream of the openings of the channels (54, 64) of the air circuit, between the openings of the channels (54, 64) of the air circuit and the openings of the channels (55, 65) of the oil circuit, and downstream of the openings of the channels (55, 65) of the oil circuit, each sealing groove (61, 62, 63) being occupied by a seal (80) in contact with the support (50).

7. The stator structure according to any of the preceding claims, wherein the channels (54, 55, 64, 65) have an elongated section along the circumferential direction.

8. The stator structure according to any of the preceding claims, wherein, the oil circuit being a drain circuit, the structure (22) further defines an oil recovery circuit composed of at least one channel (57) extending inside the support (50) from an inner opening defined in the inner surface (59) by the channel (57), the inner opening being downstream of the flange (60) and opening out the channel (57) into the oil enclosure (H2) along a direction comprising a radial component.

9. The stator structure according to claim 8, wherein the channel (57) of the recovery circuit has an elongated section along the circumferential direction.

10. The stator structure according to any of the preceding claims, comprising, upstream of the flange (60), a member for fixing the flange (60) to the support (50).

11. The stator structure according to any of the preceding claims comprising an error-proofing device arranged to ensure a predetermined angular position of the flange (60) relative to the support (50).

12. A turbomachine comprising a stator structure according to any of the preceding claims.

13. The turbomachine comprising a stator structure according to claim 8 or 9 and further comprising:
- a fan shaft (13) able to drive a fan disk (2),
- a fan shaft bearing (P1) delimiting the oil enclosure (H2) and connecting the stator structure (22) and the shaft (13), and
- a deflector (28) delimiting the oil chamber (H2), able to be driven by the shaft (13) and extending radially towards the opening of the channel (57) of the recovery circuit,
an outer radial end (29) of the deflector (28) being located facing the opening so that oil can flow along the deflector (28) towards the channel (57) of the recovery circuit.

14. An aircraft comprising at least one turbomachine according to any of claims 12 or 13.
